# EUROPÄISCHE PATENTSCHRIFT

(11) **EP 3 729 162 B1**
(45) Veröffentlichungstag und Bekanntmachung des Hinweises auf die Patenterteilung: **24.04.2024**
(21) Anmeldenummer: 18836235.4
(22) Anmeldetag: 20.12.2018
(51) Int. Cl.: G02B 21/00, G01N 21/64

(54) **VERFAHREN ZUM ABBILDEN EINER PROBE UNTER VERWENDUNG EINES FLUORESZENZMIKROSKOPS MIT STIMULIERTER EMISSIONSDEPLETION**
METHOD FOR IMAGING A SAMPLE USING A FLUORESCENCE MICROSCOPE WITH STIMULATED EMISSION DEPLETION
PROCÉDÉ DESTINÉ À REPRÉSENTER UN ÉCHANTILLON AU MOYEN D'UN MICROSCOPE À FLUORESCENCE À DÉPLÉTION PAR ÉMISSION STIMULÉE

(30) Priorität: 22.12.2017 DE 102017131249
(43) Veröffentlichungstag der Anmeldung: 28.10.2020
(73) Patentinhaber: Leica Microsystems CMS GmbH, 35578 Wetzlar (DE)
(72) Erfinder: FÖLLING, Jonas, 69123 Heidelberg (DE)
(74) Vertreter: Schaumburg und Partner Patentanwälte mbB
(86) Internationale Anmeldenummer: PCT/EP2018/086083
(87) Internationale Veröffentlichungsnummer: WO 2019/122070

(56) Entgegenhaltungen:
- WO-A1-2017/153430
- JÖRN HEINE ET AL: "Adaptive-illumination STED nanoscopy", PROCEEDINGS OF THE NATIONAL ACADEMY OF SCIENCES OF THE UNITED STATES OF AMERICA, Bd. 114, Nr. 37, 28. August 2017 (2017-08-28), Seiten 9797-9802, XP055466784, US ISSN: 0027-8424, DOI: 10.1073/pnas.1708304114 in der Anmeldung erwähnt
- Fabian G?ttfert ET AL: "Strong signal increase in STED fluorescence microscopy by imaging regions of subdiffraction extent", Proceedings of the National Academy of Sciences, vol. 114, no. 9, 13 February 2017 (2017-02-13), pages 2125-2130, XP055433907, US ISSN: 0027-8424, DOI: 10.1073/pnas.1621495114
- Thorsten Staudt ET AL: "Far-field optical nanoscopy with reduced number of state transition cycles", Optics Express, vol. 19, no. 6, 14 March 2011 (2011-03-14) , pages 5644-5657, XP055266062, DOI: 10.1364/OE.19.005644

## Beschreibung

Die Erfindung betrifft ein Verfahren zum Abbilden einer Probe unter Verwendung eines Fluoreszenzmikroskops mit stimulierter Emissionsdepletion, umfassend einen Bildgebungsprozess, in dem das Fluoreszenzmikroskop mittels einer Mikroskopsteuerung derart gesteuert wird, dass ein Beleuchtungsfokus erzeugt wird, indem einer fokussierten Anregungslichtverteilung eine fokussierte Abregungslichtverteilung überlagert wird, wodurch die Probe beim Beleuchten mit dem Beleuchtungsfokus nur innerhalb eines effektiven Anregungsfokus, dessen Ausdehnung gegenüber der Ausdehung der Anregungslichtverteilung verringert ist, zur Emission von bildgebendem Fluoreszenzlicht angeregt wird, und innerhalb eines Zielbereichs der Probe eine Vielzahl von Probensegmenten sukzessive mittels des Beleuchtungsfokus mit einer ersten Ortsauflösung, die an die verringerte Ausdehnung des effektiven Anregungsfokus angepasst ist, abgerastert und in eine entsprechende Vielzahl von Bildsegmenten abgebildet werden, aus denen ein Rasterbild erzeugt wird. Die Erfindung betrifft ferner ein in dieser Weise arbeitendes Fluoreszenzmikroskop.

In jüngerer Vergangenheit wurden fluoreszenzmikroskopische Verfahren entwickelt, die es ermöglichen, Probenstrukturen mit einer Ortsauflösung abzubilden, die nicht durch die einst von Ernst Abbe formulierte Auflösungsgrenze der lichtmikroskopischen Abbildung limitiert ist. Die sogenannte stimulierte Emissionsdepletion, kurz STED (Stimulated Emission Depletion) ist eines von mehreren Verfahren, die eine solche erhöhte Ortsauflösung ermöglichen.

Bei der STED-Mikroskopie wird ein Laserstrahl in die Probe fokussiert, um dort vorhandene Fluoreszenzfarbstoffe zur Abgabe von Fluoreszenzstrahlung anzuregen. Die so in der Probe erzeugte Anregungslichtverteilung weist eine räumliche Ausdehnung auf, die der lichtmikroskopischen Auflösungsgrenze unterliegt, d.h. nicht beliebig verkleinert werden kann. Um dennoch eine erhöhte Ortsauflösung zu ermöglichen, wird der Anregungslichtverteilung durch Einstrahlen von Licht, welches die angeregten Fluoreszenzfarbstoffe im Wege der stimulierten Emission abregt, eine fokussierte Abregungslichtverteilung überlagert. Diese im Weiteren auch als STED-Licht bezeichnete Abregungslichtverteilung, die zusammen mit der Anregungslichtverteilung den Beleuchtungsfokus bildet, hat üblicherweise ein ringförmiges Intensitätsprofil mit einem zentralen Minimum, in dem die Intensität möglichst auf Null abfällt.

Zur Steigerung der Ortsauflösung wird die Abregungslichtverteilung der Anregungslichtverteilung so überlagert, dass ihre zentrale Intensitätsnullstelle genau im Bereich des Intensitätsmaximums der Anregungslichtverteilung liegt. In diesem zentralen Bereich kommt es deshalb nicht zu einer durch stimulierte Emission verursachten Abregung der durch die Anregungslichtverteilung angeregten Fluoreszenzfarbstoffe. Mit anderen Worten wird in dem zentralen Bereich die spontane Fluoreszenzabstrahlung durch die Abregungslichtverteilung nicht unterdrückt.

Eine Unterdrückung der spontanen Fluoreszenzabstrahlung ergibt sich jedoch in den an den vorgenannten zentralen Bereich anschließenden Außenbereichen der Anregungslichtverteilung, in denen die Intensität der überlagerten Abregungslichtverteilung ausgehend von der Nullstelle zunächst steil ansteigt. Im Ergebnis ergibt sich so aus der Überlagerung der Anregungslichtverteilung und der Abregungslichtverteilung eine auflösungssteigernde Verkleinerung desjenigen Probenbereichs, der durch das Anregungslicht überhaupt zur Emission von Fluoreszenzlicht, das zur Bildgebung nutzbar ist, angeregt werden kann. Dieser Probenbereich, dessen Ausdehnung gegenüber der Ausdehnung der Anregungslichtverteilung deutlich verringert ist, wird im Weiteren als effektiver Anregungsfokus bezeichnet.

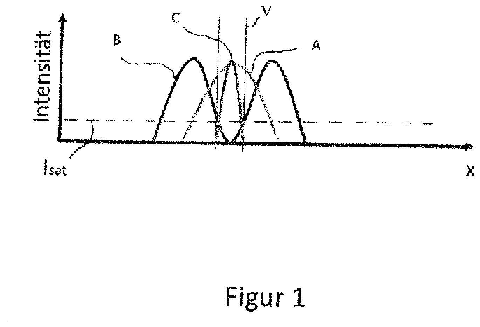

Der vorstehend erläuterte Sachverhalt ist in Figur 1 beispielhaft veranschaulicht. Dabei zeigt Figur 1 einen Querschnitt durch eine typische Lichtverteilung, die in der STED-Mikroskopie eingesetzt wird, um die Ortsauflösung (in Figur 1 in x-Richtung) zu erhöhen.

In Figur 1 bezeichnet A die Anregungslichtverteilung und B die Abregungslichtverteilung, d.h. das STED-Licht. Der allein anregungswirksame Teil der Anregungslichtverteilung A befindet sich innerhalb des zentralen Bereichs zwischen den beiden vertikalen Linien V, wobei die Anregungswirksamkeit dieses Teils, die entsprechend dem Verlauf der Abregungslichtverteilung innerhalb des zentralen Bereichs variiert, in Figur 1 durch die Kurve C angedeutet ist. Die Kurve C spiegelt so auch den oben genannten effektiven Anregungsfokus wider. In Figur 1 ist ferner eine Sättigungsintensität Iₛₐₜ angegeben. Diese bezeichnet diejenige Intensität, die nötig ist, um mit Hilfe des STED-Lichts B die in der Probe enthaltenen Fluoreszenzfarbstoffe im Wege der stimulierten Emission vollständig abzuregen.

Problematisch an der in Figur 1 gezeigten Lichtverteilung ist nun, dass das STED-Licht B im Zentrum, in dem die Anregungslichtverteilung seine maximale Intensität hat, eine Nullstelle aufweisen muss und zugleich möglichst nahe dieser Nullstelle schon auf die Sättigungsintensität Iₛₐₜ ansteigt, um den effektiven Anregungsfokus auf einen möglichst kleinen Probenbereich zu begrenzen. Dieser begrenzte Probenbereich definiert die effektive Punktspreizfunktion, kurz PSF, und damit die Ortsauflösung. Eine solche Intensitätsverteilung des STED-Lichts, die eine Nullstelle und eine in unmittelbarer Nähe der Nullstelle möglichst stark auf den benötigten Wert Iₛₐₜ ansteigenden Intensität aufweist, lässt sich derzeit aber nur mit einer vergleichsweise hohen Strahlungsleistung erzeugen, die zwangsläufig dazu führt, dass die Intensitätsverteilung des STED-Lichts B mit zunehmendem Abstand von der Nullstelle zunächst Intensitäten aufweist, die um ein Vielfaches höher sind als Iₛₐₜ. Diese mit einer hohen Strahlungsleistung zwangsläufig einhergehenden, für die Fluoreszenzunterdrückung an sich unnötigen Lichtintensitäten führen aber dazu, dass damit beaufschlagte Probenbereiche einer besonders hohen Lichtbelastung ausgesetzt sind, was zu einem starken Fotobleichen der Fluoreszenzfarbstoffe führt und zudem Schäden in dem untersuchten Gewebe verursachen kann. So werden während eines herkömmlichen STED-Bildgebungsprozesses sämtliche höchst aufgelöst abzubildende Probensegmente mit der gesamten Lichtverteilung gemäß Figur 1 gescannt, d.h. abgerastert, also insbesondere auch mit den weiter von der Nullstelle abliegenden Intensitätsüberschwingern des STED-Lichts B, in denen die Lichtintensität größer als die Sättigungsintensität Iₛₐₜ ist.

Das in herkömmlichen STED-Mikroskopieverfahren auftretende Fotobleichen macht es häufig unmöglich, eine Probe mehrfach abzubilden, etwa um Veränderungen in der Probe im Laufe der Zeit zu detektieren. Häufig ist das Fotobleichen sogar so stark, dass nicht einmal ein einziges Rasterbild aufgenommen werden kann oder aber das aufgenommene Bild so wenig Signal enthält, dass eine Auswertung schwierig ist. Dies ist insbesondere bei dreidimensionalen Bildaufnahmeprozessen problematisch, da hier jedes Probensegment sehr oft von der Lichtverteilung getroffen wird und damit besonders stark bleicht.

Aus dem Stand der Technik sind einige Lösungen bekannt, die darauf abzielen, gerade auch bei STED-Anwendungen das Fotobleichen zu reduzieren. In einer dieser Lösungen wird vorgeschlagen, während des Rasterprozesses bei jedem Pixel oder Probensegment für einen kurzen Diagnosezeitraum zu messen, ob das Fluoreszenzsignal oberhalb eines vorbestimmten Grenzwerts liegt. Ist dies der Fall, so bleibt der aus der Anregungslichtverteilung und dem STED-Licht zusammengesetzte Beleuchtungsfokus weiterhin eingeschaltet, und es wird für dieses Probensegment das erfasste Fluoreszenzsignal gespeichert. Liegt dagegen das während des Diagnosezeitraums erfasste Fluoreszenzsignal unterhalb des Grenzwerts, dann wird der Beleuchtungsfokus ausgeschaltet, da angenommen wird, dass sich in diesem Fall kein Fluoreszenzfarbstoff im STED-Detektionsbereich befindet. Dadurch bleiben außerhalb des STED-Detektionsbereich befindliche Fluoreszenzfarbstoffe von dem Beleuchtungsfokus verschont.

In Göttfert et al., "Strong signal increase in STED fluorescence microscopy by imaging regions of subdiffraction extent", PNAS 2017, vol. 114 no. 9, 2125 - 2130 werden nur sehr kleine Teilbereiche der Probe mit dem Beleuchtungsfokus abgerastert. Diese Teilbereiche sind so klein, dass der interessierende Bereich deutlich kleiner als eine konfokale PSF ist. Auf diese Weise ist sichergestellt, dass die interessierende Probenstruktur nur in dem unmittelbar an die Nullstelle anschließenden Bereich mit der STED-Lichtverteilung in Kontakt kommt, nicht aber deren äußere Bereiche, in denen die STED-Lichtverteilung besonders hohe Intensitäten aufweist. Somit ist dieses Verfahren nur für sehr kleine Bildfelder anwendbar, die typischerweise unter 150 nm liegen. Außerdem werden zur Durchführung dieses Verfahrens spezielle elektroopische Scanner benötigt, da übliche mechanische Scanner für solch kleine Bildfelder ungeeignet sind. Ein entsprechendes Verfahren ist in WO 2017/153430 A1 beschrieben sowie in dem Artikel von Thorsten Staudt et al.: Far-field optical nanoscopy with reduced number of state transition cycles", Optics Express, Bd. 19, Nr. 6, 14. März 2011, Seiten 5644-5657, XP055266062, DOI: 10.1364/OE.19.005644.

In Heine et al., "Adaptive-illumination STED nanoscopy", PNAS 2017, vol. 114 no. 37, 9797 - 9802 wird eine Methode vorgestellt, in der ebenfalls während des STED-Bildgebungsprozesses das aus jedem einzelnen Probensegment stammende Fluoreszenzsignal analysiert wird. Jedoch wird hier das Signal nicht bei voller Intensität des Beleuchtungsfokus analysiert. Vielmehr wird die Strahlungsleistung des Beleuchtungsfokus schrittweise erhöht.

Bei einem solchen pixelweise ausgeführten Prozess nimmt bereits die zu Analysezwecken vorgenommene Erfassung der STED-Lichtintensität eine gewisse Zeit in Anspruch. Erst danach erfolgt die eigentliche Datenaufnahme für dieses Pixel, die erneut Zeit in Anspruch nimmt. Dadurch ergibt sich eine sehr lange Gesamtmesszeit. So beträgt die Verweildauer des Beleuchtungsfokus derzeit etwa 80 bis 100 µs pro Pixel. Bei Aufnahme eines zweidimensionalen Bildes, das typischerweise eine Größe von 10 µm × 10 µm bei einer Pixelkantenlänge von 10 nm hat, führt dies zu einer Gesamtmesszeit von 80 bis 100 s. Bei Aufnahme eines dreidimensionalen Bildes fällt eine solche Messzeit für jede einzelne Bildebene an, was den Zeitaufwand drastisch erhöht.

Zu beachten ist hierbei, dass es bei Verwendung üblicher mechanischer Scanner in der Regel nicht ohne weiteres möglich ist, von einem Pixel, in dem kein Signal detektiert worden ist, schnell auf das nächste Pixel zu springen, um die Verweildauer auf ersterem Pixel wenigstens um die Zeit zu verkürzen, die zum Auslesen des Bildsignals benötigt wird. Ein solcher Sprung würde nämlich aufgrund der Trägheit des Scanners zu Unregelmäßigkeiten im Scanprozess und damit zu Bildfehlern führen. Somit müssen im Stand der Technik alle Pixel stets in der gleichen langsamen Geschwindigkeit abgerastert werden.

Aufgabe der Erfindung ist es, ein Verfahren anzugeben, mit dem sich eine Probe unter Verwendung eines Fluoreszenzmikroskops mit stimulierter Emissionsdepletion schnell und probenschonend abbilden lässt. Ferner ist es Aufgabe der Erfindung, ein entsprechend arbeitendes Fluoreszenzmikroskop anzugeben.

Die Erfindung löst diese Aufgaben durch die Gegenstände der unabhängigen Ansprüche. Vorteilhafte Weiterbildungen sind in den abhängigen Ansprüchen angegeben.

Die Erfindung sieht ein Verfahren zum Abbilden einer Probe unter Verwendung eines Fluoreszenzmikroskops mit stimulierter Emissionsdepletion vor, das einen Bildgebungsprozess umfasst, in dem das Fluoreszenzmikroskop mittels einer Mikroskopsteuerung derart gesteuert wird, dass ein Beleuchtungsfokus erzeugt wird, indem einer fokussierten Anregungslichtverteilung eine fokussierte Abregungslichtverteilung zur stimulierten Emissionsdepletion überlagert wird, wodurch die Probe beim Beleuchten mit dem Beleuchtungsfokus nur innerhalb eines effektiven Anregungsfokus, dessen Ausdehnung gegenüber der Ausdehnung der Anregungslichtverteilung verringert ist, zur Emission von bildgebendem Fluoreszenzlicht angeregt wird, und innerhalb eines Zielbereichs der Probe eine Vielzahl von Probensegmenten sukzessive mittels des Beleuchtungsfokus mit einer ersten Ortsauflösung, die an die verringerte Ausdehnung des effektiven Anregungsfokus angepasst ist, abgerastert und in eine entsprechende Vielzahl von Bildsegmenten abgebildet werden, aus denen ein Rasterbild erzeugt wird. Erfindungsgemäß wird das Fluoreszenzmikroskop mittels der Mikroskopsteuerung ferner derart gesteuert, dass vor dem Bildgebungsprozess ein Übersichtsbild des Zielbereichs mit einer zweiten Ortsauflösung erzeugt wird, die geringer als die erste Ortsauflösung und höher als eine an die Ausdehnung der Anregungslichtverteilung angepasste dritte Ortsauflösung ist, und das Übersichtsbild zur Identifizierung von Bildbereichen ohne relevante Bildinformation analysiert wird, und während des Bildgebungsprozesses beim Abrastern derjenigen Probensegmente, die den in dem Übersichtsbild identifizierten Bildbereichen ohne relevante Bildinformation zugeordnet sind, zumindest die Strahlungsleistung der Abregungslichtverteilung verringert wird.

Um die Probe vor Fotobleichen zu schützen, sieht die Erfindung einen dem eigentlichen Bildgebungsprozess vorgeordneten Verfahrensschritt vor, in dem ein Übersichtsbild des Zielbereichs aufgenommen wird, um darin Bildbereiche ohne relevante Bildinformation zu identifizieren. In solchen Bildbereichen ist keine interessierende Probenstruktur vorhanden, die im nachfolgenden STED-Bildgebungsprozess mit höchster Ortsauflösung abgebildet werden müsste. Folglich kann für Probensegmente, die diesen für die Bildgebung irrelevanten Bildbereichen zugeordnet sind, der Beleuchtungsfokus so moduliert werden, dass die durch ihn verursachte Lichtbelastung der Probe verringert wird. Erfindungsgemäß erfolgt dies dadurch, dass zumindest die Strahlungsleistung der Abregungslichtverteilung, die im normalen STED-Bildgebungsprozess zur Minimierung des effektiven Anregungsfokus vergleichsweise hoch ist, verringert wird. Um eine Analyse des Übersichtsbilds zur Identifizierung von Bildbereichen ohne relevante Bildinformation zu ermöglichen, wird das Übersichtsbild mit einer Ortsauflösung aufgenommen, die einerseits höher ist als diejenige Auflösung, die unter Verwendung der Anregungslichtverteilung allein erreichbar ist. Andererseits ist die Ortsauflösung des Übersichtsbilds geringer als diejenige, die in der eigentlichen STED-Bildgebung zur Erzeugung eines höchst aufgelösten Rasterbildes angewandt wird. Dadurch ist es möglich, das Übersichtsbild sehr viel schneller als das STED-Rasterbild aufzunehmen.

Damit bietet das erfindungsgemäße Verfahren erhebliche Geschwindigkeitsvorteile gegenüber herkömmlichen Methoden, die auf die Vermeidung von Bleicheffekten ausgelegt sind und in denen während des Scanvorgangs pixelweise, d.h. für jedes abzubildende Probensegment eine Entscheidung zu treffen ist, ob das STED-Licht ein- oder auszuschalten ist. Durch die erfindungsgemäße Erzeugung und Analyse des Übersichtsbilds wird also die Zeit eingespart, die im Stand der Technik für den pixelweise durchgeführten Analyseprozess benötigt wird.

Die Erfindung gestattet eine effektive Bleichreduktion dadurch, dass zumindest die Strahlungsleistung der STED-Lichts auf Basis der Analyse des Übersichtsbilds so moduliert wird, dass während des Abrastprozesses möglichst wenig Probenstruktur mit einer STED-Intensität beaufschlagt wird, die oberhalb der Sättigungsintensität Iₛₐₜ liegt. Dies kann beispielsweise in der Weise erfolgen, dass die volle STED-Intensität nur dann aktiviert wird, wenn sich die abzubildende Probenstruktur bzw. ein möglichst großer Teil davon in einem Bereich befindet, der dicht um die zentrale Nullstelle des STED-Lichts herum verteilt ist, also unter Bezugnahme auf Figur 1 in dem Bereich, der zwischen den beiden vertikalen Linien V liegt. Befindet sich die aufzunehmende Probenstruktur in einem Bereich, in dem die STED-Intensität bei voller STED-Strahlungsleistung höher als die Sättigungsintensität wäre, oder in einem Bereich, in dem gar kein Anregungslicht ankommt, so kann nach dem erfindungsgemäßen Verfahren die STED-Strahlungsleistung so eingestellt werden, dass die Probenstruktur nur höchstens mit der Sättigungsintensität Iₛₐₜ beaufschlagt wird. Alternativ kann das STED-Licht auch ganz abgeschaltet werden. Die volle STED-Strahlungsleitung sollte nur dann eingestellt werden, wenn sich die aufzunehmende Probenstruktur in einem Bereich dicht um die Nullstelle der STED-Lichtverteilung befindet. Dieser Bereich erstreckt sich typischerweise bis auf 50 bis 100 nm von der Nullstelle weg. Jedenfalls ist seine Ausdehnung kleiner als die Ausdehnung der Anregungslichtverteilung, welche die Ortsauflösung eines für die STED-Bildgebung üblicherweise eingesetzten Konfokalmikroskops bestimmt.

Vorzugsweise wird beim Abrastern derjenigen Probensegmente, die den in dem Übersichtsbild identifizierten Bildbereichen ohne relevante Bildinformation zugeordnet sind, zusätzlich die Strahlungsleistung der Anregungslichtverteilung verringert. Dies trägt dazu bei, das Fotobleichen noch wirksamer zu verringern.

In einer bevorzugten Ausführung wird die genannte Strahlungsleistung auf Null verringert. Dies bedeutet, dass während des STED-Bildgebungsprozesses für diejenigen Probensegmente, die keine interessierende Probenstruktur aufweisen, das Anregungslicht bzw. das der stimulierten Emissionsdepletion dienende Abregungslicht ausgeschaltet werden.

Das Übersichtsbild wird erfindungsgemäß mit der zweiten Ortsauflösung erzeugt, indem zunächst ein Rohbild mit einer Ortsauflösung aufgenommen wird, die geringer als die zweite Ortsauflösung ist, und dann an dem Rohbild eine die Ortsauflösung steigernde Bildverarbeitung durchgeführt wird. Diese Ausführungsform sieht einen zweistufigen Prozess zur Generierung des Übersichtsbildes vor, wobei in einer ersten, im Wesentlichen Hardware-basierten Stufe Bilddaten in Form eines vergleichsweise niedrig aufgelösten Rohbildes bereitgestellt werden, die dann in einem zweiten, Software-basierten Schritt zu dem höher aufgelösten Übersichtsbild weiterverarbeitet werden.

In einer besonders bevorzugten Ausgestaltung wird das Rohbild erzeugt, indem der Zielbereich mittels der Anregungslichtverteilung mit der dritten Ortsauflösung abgerastert wird. Dies hat den Vorteil, dass zur Generierung des Rohbildes im Wesentlichen der gleiche Bildgebungsprozess wie zur anschließenden Aufnahme des STED-Bildes angewandt werden kann, mit dem Unterschied, dass zur Aufnahme des Rohbildes die Probe nur mit dem Anregungslicht, nicht aber mit dem Abregungslicht beleuchtet wird.

Die vorgenannte Ausgestaltung des Verfahrens wird vorteilhaft dadurch weitergebildet, dass das Rohbild durch eine konfokale Rasterabbildung erzeugt wird. Das konfokale Rohbild, das typischerweise eine Ortsauflösung im Bereich von 250 nm aufweist, bildet eine geeignete Grundlage für die anschließende Bildverarbeitung, durch die das höher aufgelöste Übersichtsbild generiert wird.

Die Erzeugung des Rohbildes muss nicht zwingend auf einem rastermikroskopischen Prozess basieren. Das Rohbild kann beispielsweise auch unter Anwendung einer Weitfeldbeleuchtung generiert werden.

In einer besonders bevorzugten Ausführungsform sieht die Bildverarbeitung zur Erzeugung des Übersichtsbildes eine Entfaltung des Rohbildes vor. So sind im Stand der Technik hocheffiziente Entfaltungsalgorithmen verfügbar, die unter intelligenter Ausnutzung der Rechenleistung moderner Arbeitsplatzrechner sehr kurze Berechnungszeiten ermöglichen, die unterhalb einiger Zehn Millisekunden liegen. Dadurch ist es möglich, das Übersichtsbild in sehr kurzer Zeit zu erzeugen. Zudem ist die Entfaltung zum Erhöhen der Bildauflösung besonders dann gut geeignet, wenn die Probe eine eher weniger dichte Färbung mit Fluoreszenzfarbstoffen aufweist, d.h. die im eigentlichen Bildgebungsprozess zu untersuchenden feinen Probenstrukturen räumlich nicht zu dicht beieinanderliegen. In einer solchen Situation ist das erfindungsgemäße Verfahren zur Bleichreduktion besonders gut geeignet.

Vorzugsweise wird auf Grundlage der Analyse des Übersichtsbildes eine Strahlungsleistungstabelle erstellt und gespeichert, die während des Bildgebungsprozesses jedem abzubildenden Probensegment zumindest einen Wert für die Strahlungsleistung der Abregungslichtverteilung zuordnet.

In einer besonders bevorzugten Ausführungsform werden unter den in dem Übersichtsbild identifizierten Bildbereichen ohne relevante Bildinformation Ausschlussbereiche bestimmt und diejenigen Probensegmente, die diesen Ausschlussbereichen zugeordnet sind, beim Abrastern des Zielbereichs mit der ersten Ortsauflösung übersprungen. Dadurch ist es möglich, in dem hochauflösenden STED-Bildgebungsprozess größere Probenbereiche, denen beispielsweise eine oder mehrere aufeinander folgenden Zeilen von Bildsegmenten zugeordnet sind, zu überspringen, wodurch die Bildgebung weiter beschleunigt wird. Das Überspringen von ganzen Zeilen ist besonders vorteilhaft, da der in einem üblichen STED-Rastermikroskop eingesetzte Scanspiegel, der den Beleuchtungsfokus in die nächste Zeile lenkt, nur vergleichsweise langsam bewegt wird, so dass sich hier Bildfehler nicht oder deutlich weniger bemerkbar machen, wenn in unterschiedlichen Bereichen der Scanspiegel unterschiedliche Distanzen zurücklegen muss. Dies gilt etwa, wenn in Zeilen mit Bildinformation der Scanspiegel zeilenweise weiterspringt, während er in Zeilen ohne Bildinformation eine oder mehrere Zeilen überspringt. Dabei kann mit konventionellen mechanischen Scannern gearbeitet werden, die das Abrastern eines großen Bildbereichs zulassen. Insbesondere ist man nicht auf spezielle elektrooptische Scanner angewiesen, die nur einen sehr kleinen Bildbereich abrastern können.

Die zweite Ortsauflösung ist gegenüber der dritten Ortsauflösung erfindungsgemäß um einen Faktor zwischen 1,5 und 2 erhöht.

Die Erfindung wird im Folgenden anhand der Figuren näher erläutert. Darin zeigen:
- Fig. 1: einen Querschnitt durch eine in der STED-Mikroskopie zur Steigerung der Ortsauflösung eingesetzte Lichtverteilung;
- Fig. 2: eine schematische Darstellung eine erfindungsgemäßen STED-Mikroskops;
- Fig. 3: eine schematische Darstellung eines erfindungsgemäß generierten Rohbildes mit der darin sichtbaren Probenstruktur;
- Fig. 4: eine schematische Darstellung eines erfindungsgemäß generierten Übersichtsbildes mit der darin sichtbaren Probenstruktur;
- Fig. 5: eine schematische Darstellung, welche die Funktion einer auf Grundlage des Übersichtsbilds erstellten Tabelle zur Steuerung der Strahlungsleistung des Beleuchtungsfokus veranschaulicht; und
- Fig. 6: eine schematische Darstellung, die ein resultierendes STED-Rasterbild mit der darin sichtbaren Probenstruktur zeigt.

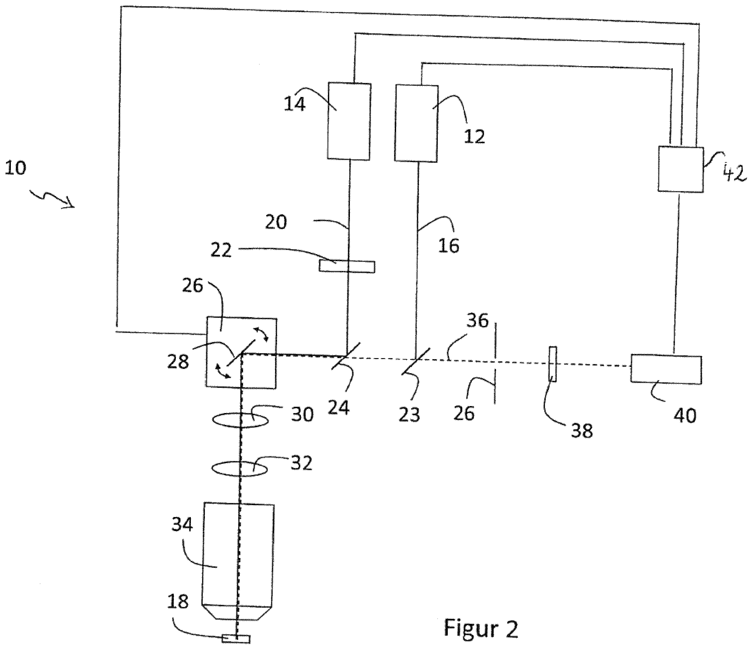

Figur 2 zeigt ein erfindungsgemäßes STED-Mikroskop 10, das darauf ausgelegt ist, unter Anwendung des an sich bekannten Prinzips der stimulierten Emissionsdepletion fluoreszierende Probenstrukturen mit hoher Ortsauflösung abzubilden.

Das STED-Mikroskop 10 enthält eine Anregungslichtquelle 12 und eine Abregungslichtquelle 14, die jeweils als Laserlichtquellen ausgeführt sind. Die Anregungslichtquelle 12 emittiert einen Anregungslichtstrahl 16, dessen Wellenlänge so gewählt ist, dass er in einer abzubildenden Probe 18 enthaltene Fluoreszenzfarbstoffe zur spontanen Emission von Fluoreszenzlicht anregt. Demgegenüber emittiert die Abregungslichtquelle 14 einen Abregungslichtstrahl 20, dessen Wellenlänge darauf ausgelegt ist, die in der Probe 18 enthaltenen Fluoreszenzfarbstoffe nach dem Prinzip der stimulierten Emissionsdepletion abzuregen.

Der von der Anregungslichtquelle 12 ausgesendete Anregungslichtstrahl 16 wird an einem ersten dichroitischen Strahlteiler 23 in Richtung eines zweiten dichroitischen Strahlteilers 24 reflektiert, an dem der Anregungslichtstrahl 16 mit dem zuvor durch einen Phasenmodulator 22 getretenen Abregungslichtstrahl 20 zusammengeführt wird. Hierzu ist der zweite Strahlteiler 24 derart ausgebildet, dass er den Anregungslichtstrahl 16 transmittiert, während er den Abregungslichtstrahl 22 reflektiert.

Die durch den zweiten Strahlteiler 24 einander überlagerten Lichtstrahlen 16 und 20 propagieren weiter auf ein Rastermodul 26, das einen Rasterspiegel 28 enthält. Der Anregungslichtstrahl 16 und der Abregungslichtstrahl 20 treten nach Reflexion an dem Rasterspiegel 28 durch eine Scanoptik 30 sowie eine Tubusoptik 32 und werden anschließend durch ein Objektiv 34 auf die Probe 18 fokussiert.

Die durch das Objektiv 34 fokussierten Lichtstrahlen 16, 20 werden in der Probe 18 zu einem Beleuchtungsfokus überlagert, den das Rastermodul 26 durch Verkippen des Rasterspiegels 28 in einer Scanbewegung über die Probe 18 führt. Auf diese Weise wird ein Zielbereich der Probe 18 während des STED-Bildgebungsprozesses mit dem Beleuchtungsfokus abgetastet.

Der Phasenmodulator 22 beeinflusst den von der Abregungslichtquelle 14 emittierten Abregungslichtstrahl 20 derart, dass die durch das Objektiv 34 in der Probe 18 erzeugte Abregungslichtverteilung einen Ringfokus bildet, der über die Außenbereiche der durch das Objektiv 34 in die Probe 18 fokussierten Anregungslichtverteilung gelegt ist. Dies hat zur Folge, dass die mit dem Abregungsfokus beleuchteten Probenbereiche im Wege der stimulierten Emissionsdepletion abgeregt werden und durch die Anregungslichtverteilung nicht mehr zur Emission von bildgebendem Fluoreszenzlicht angeregt werden können. Somit bildet sich im zentralen Bereich des Beleuchtungsfokus ein effektiver Anregungsfokus aus, dessen Ausdehnung kleiner als die Ausdehnung der in die Probe 14 fokussierten Anregungslichtverteilung ist. Nur innerhalb dieses effektiven Anregungsfokus werden die in der Probe enthaltenen Fluoreszenzfarbstoffe zur Emission von Fluoreszenzlicht angeregt.

Die Ortsauflösung, mit der die Probe 18 während des STED-Bildgebungsprozesses mit dem Beleuchtungsfokus abgerastert wird, ist an die Ausdehnung des vorgenannten effektiven Anregungsfokus angepasst. Da diese Ausdehnung durch die Überlagerung der Abregungslichtverteilung im Wege der stimulierten Emissionsdepletion gegenüber der Ausdehnung der in die Probe 18 eingestrahlten Anregungslichtverteilung deutlich verringert ist, ergibt sich eine entsprechend hohe Ortsauflösung, mit der das Rasterbild während des STED-Bildgebungsprozesses erzeugt wird.

Das von der Probe 18 abgegebene Fluoreszenzlicht, das in Figur 2 mit 36 bezeichnet ist, gelangt nach Durchtritt durch das Objektiv 34, die Tubusoptik 32 und die Scanoptik 30 zurück auf den Rasterspiegel 28. Nach Reflexion an dem Rasterspiegel 28 passiert das Fluoreszenzlicht 36 nacheinander die beiden dichroitischen Strahlteiler 24, 23, eine Detektionslochblende 26 und einen Filter 38, bevor es von einem Detektor 40 erfasst wird.

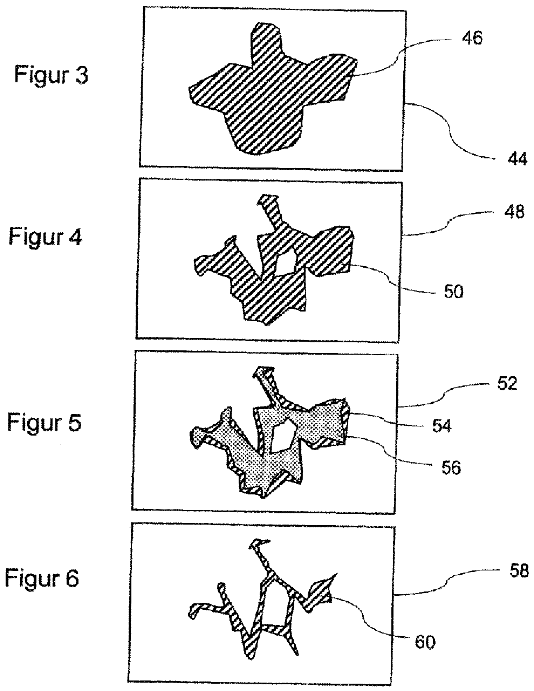

In den Figuren 3 bis 6 ist rein beispielhaft veranschaulicht, wie das erfindungsgemäße Verfahren durchgeführt werden kann.

In einem ersten Schritt steuert die Mikroskopsteuerung 42 das STED-Mikroskop 10 so an, dass vor dem eigentlichen STED-Bildgebungsprozess in an sich bekannter Weise im Konfokalmodus ein Rasterbild aufgenommen wird, das ein erfindungsgemäß weiter zu verarbeitendes Konfokal-Rohbild 44 darstellt. Hierzu wird die Probe 18 nur mit dem Anregungslichtstahl 16, nicht jedoch mit dem Abregungslichtstrahl 20 beleuchtet. Dabei wird der Anregungslichtstrahl 16 mittels des Rasterspiegels 28 in einer Scanbewegung über die Probe 18 geführt. Die Ortsauflösung, mit der in diesem ersten Schritt das Konfokal-Rohbild 44 erzeugt wird, ist an die räumliche Ausdehnung der Anregungslichtverteilung angepasst, die das Objektiv 34 in die Probe 18 fokussiert. Da diese Ausdehnung deutlich größer als die Ausdehnung des in der STED-Bildgebung genutzten effektiven Anregungsfokus ist, verringert sich die Ortsauflösung gegenüber der STED-Auflösung deutlich. Dies hat zur Folge, dass das Konfokal-Rohbild 44 deutlich schneller und probenschonender als das später aufzunehmende STED-Bild generiert werden kann. Wie in Figur 3 gezeigt, ist in dem Konfokal-Rohbild 44 eine interessierende Probenstruktur 46 mit vergleichsweise geringer Ortsauflösung abgebildet.

In Figur 4 ist ein zweiter Schritt des Verfahrens veranschaulicht, in dem auf Basis des Konfokal-Rohbildes 44 zur Steigerung der Ortsauflösung durch Bildverarbeitung, beispielsweise durch Anwenden eines Entfaltungsalgorithmus, ein Übersichtsbild 48 generiert wird. In dem gezeigten Ausführungsbeispiel ist die Ortsauflösung des Übersichtsbilds 48 gegenüber derjenigen des Konfokal-Rohbildes 44 um einen Faktor erhöht, der etwa zwischen 1,5 und 2 liegt. Dementsprechend ist die in Figur 4 mit 50 bezeichnete Probenstruktur deutlich schärfer abgebildet als in dem Konfokal-Rohbild 44 nach Figur 3.

In Figur 5 ist ein dritter Schritt des Verfahrens veranschaulicht, in dem das Übersichtsbild zunächst analysiert wird, um Bildbereiche ohne relevante Bildinformation zu identifizieren. In diesem dritten Schritt wird anschließend basierend auf der Analyse des Übersichtsbildes 48 eine Strahlungsleistungstabelle erstellt und gespeichert, die jedem in dem nachfolgend auszuführenden STED-Bildgebungsprozess mit hoher Ortsauflösung abzubildenden Probensegment eine Steuerinformation hinsichtlich der Strahlungsleistung des Beleuchtungsfokus zuordnet, die für dieses Probensegment verwendet werden soll. In dem vorliegenden Ausführungsbeispiel gibt diese Steuerinformation an, ob für das gerade betrachtete Probensegment der Beleuchtungsfokus in seiner Gesamtheit eingeschaltet oder ausgeschaltet werden soll. Figur 5 zeigt eine Karte 52, welche die Zuordnung der vorstehend erläuterten Steuerinformation zu den einzelnen Probensegmenten in Form der Strahlungsleistungstabelle repräsentiert. Dabei sind in Figur 5 Bildbereiche außerhalb eines mit 56 bezeichneten Bereichs denjenigen Probenbereichen zugeordnet, für die in dem STED-Bildgebungsprozess der Beleuchtungsfokus ausgeschaltet werden soll. Demgegenüber gibt der vorgenannte Bereich 56 diejenigen Probensegmente an, für die der Beleuchtungsfokus in dem STED-Bildgebungsprozess eingeschaltet werden soll.

Figur 6 veranschaulicht schließlich einen vierten Schritt des Verfahrens, in dem der STED-Bildgebungsprozess unter Berücksichtigung der in Schritt 3 erzeugten Steuerinformation ausgeführt wird. Dabei zeigt Figur 6 ein resultierendes STED-Rasterbild 58 mit der darin in hoher Auflösung sichtbaren Probenstruktur 60.

An dieser Stelle ist nochmals darauf hinzuweisen, dass die Figuren 3 bis 6 nur eine spezielle und besonders einfach ausgestaltete Realisierung des erfindungsgemäßen Verfahrens veranschaulichen. So bezieht sich in diesem speziellen Ausführungsbeispiel die Karte 52 nach Figur 5 auf den Beleuchtungsfokus als Ganzes, ohne zwischen dem STED-Licht und der Anregungslichtverteilung zu differenzieren. Dies bedeutet, dass in diesem speziellen Beispiel die in der Karte 52 enthaltene Steuerinformation gleichsam nur aus Nullen und Einsen besteht und der Beleuchtungsfokus für Probensegmente, denen jeweils eine Null zugeordnet ist, insgesamt ausgeschaltet wird, während er für diejenigen Probensegmente, denen eine Eins zugeordnet ist, eingeschaltet wird. Es können jedoch auch komplexere Strahlungsleistungsmodulationen insbesondere in Bezug auf das STED-Licht vorgesehen werden, die auch Zwischenwerte abdecken. Daraus resultieren entsprechend komplexere Strahlungsleistungskarten, die Zuordnungen zwischen der in dem Übersichtsbild 48 enthaltenen Bildinformation und dem Beleuchtungsfokus, insbesondere dem STED-Licht schaffen.

## Patentansprüche

1. Verfahren zum Abbilden einer Probe (18) unter Verwendung eines Fluoreszenzmikroskops (10) mit stimulierter Emissionsdepletion, umfassend einen Bildgebungsprozess, in dem das Fluoreszenzmikroskop (10) mittels einer Mikroskopsteuerung (42) derart gesteuert wird, dass
ein Beleuchtungsfokus erzeugt wird, indem einer fokussierten Anregungslichtverteilung eine fokussierte Abregungslichtverteilung zur stimulierten Emissionsdepletion überlagert wird, wodurch die Probe (18) beim Beleuchten mit dem Beleuchtungsfokus nur innerhalb eines effektiven Anregungsfokus, dessen Ausdehnung gegenüber der Ausdehnung der Anregungslichtverteilung verringert ist, zur Emission von bildgebendem Fluoreszenzlicht angeregt wird, und
innerhalb eines Zielbereichs der Probe (18) eine Vielzahl von Probensegmenten sukzessive mittels des Beleuchtungsfokus mit einer ersten Ortsauflösung, die durch die verringerte Ausdehnung des effektiven Anregungsfokus definiert ist, abgerastert und in eine entsprechende Vielzahl von Bildsegmenten abgebildet werden, aus denen ein Rasterbild (58) erzeugt wird,
wobei das Fluoreszenzmikroskop (10) mittels der Mikroskopsteuerung (42) ferner derart gesteuert wird, dass
vor dem Bildgebungsprozess ein Übersichtsbild (48) des Zielbereichs mit einer zweiten Ortsauflösung erzeugt wird, die geringer als die erste Ortsauflösung und höher als eine durch die Ausdehnung der Anregungslichtverteilung definierte dritte Ortsauflösung ist, und das Übersichtsbild (48) zur Identifizierung von Bildbereichen ohne relevante Bildinformation analysiert wird, und
während des Bildgebungsprozesses beim Abrastern derjenigen Probensegmente, die den in dem Übersichtsbild (48) identifizierten Bildbereichen ohne relevante Bildinformation zugeordnet sind, zumindest die Strahlungsleistung der Abregungslichtverteilung verringert wird,
**dadurch gekennzeichnet, dass** das Übersichtsbild (48) mit der zweiten Ortsauflösung erzeugt wird, indem zunächst ein Rohbild (44) mit einer Ortsauflösung aufgenommen wird, die geringer als die zweite Ortsauflösung ist, und dann an dem Rohbild (44) eine die Ortsauflösung steigernde Bildverarbeitung durchgeführt wird,
wobei die zweite Ortsauflösung gegenüber der dritten Ortsauflösung um einen Faktor zwischen 1,5 und 2 erhöht ist.

2. Verfahren nach Anspruch 1, **dadurch gekennzeichnet, dass** beim Abrastern derjenigen Probensegmente, die den in dem Übersichtsbild (48) identifizierten Bildbereichen ohne relevante Bildinformation zugeordnet sind, zusätzlich die Strahlungsleistung der Anregungslichtverteilung verringert wird.

3. Verfahren nach Anspruch 1 oder 2, **dadurch gekennzeichnet, dass** die genannte Strahlungsleistung auf Null verringert wird.

4. Verfahren nach Anspruch 3, **dadurch gekennzeichnet, dass** das Rohbild (44) erzeugt wird, indem der Zielbereich mittels der Anregungslichtverteilung mit der dritten Ortsauflösung abgerastert wird.

5. Verfahren nach Anspruch 4, **dadurch gekennzeichnet, dass** das Rohbild (44) durch eine konfokale Rasterabbildung erzeugt wird.

6. Verfahren nach einem der vorhergehenden Ansprüche, **dadurch gekennzeichnet, dass** das Rohbild (44) unter Anwendung einer Weitfeldbeleuchtung erzeugt wird.

7. Verfahren nach einem der vorhergehenden Ansprüche, **dadurch gekennzeichnet, dass** die Bildverarbeitung eine Entfaltung des Rohbildes (44) vorsieht.

8. Verfahren nach einem der vorhergehenden Ansprüche, **dadurch gekennzeichnet, dass** auf Grundlage der Analyse des Übersichtsbildes (48) eine Strahlungsleistungstabelle erstellt und gespeichert wird, die während des Bildgebungsprozesses jedem abzubildenden Probensegment zumindest einen Wert für die Strahlungsleistung der Abregungslichtverteilung zuordnet.

9. Verfahren nach einem der vorhergehenden Ansprüche, **dadurch gekennzeichnet, dass** unter den in dem Übersichtsbild (48) identifizierten Bildbereichen ohne relevante Bildinformation Ausschlussbereiche bestimmt werden und diejenigen Probensegmente, die diesen Ausschlussbereichen zugeordnet sind, beim Abrastern des Zielbereichs mit der ersten Ortsauflösung übersprungen werden.

10. Fluoreszenzmikroskop (10) zum Abbilden einer Probe (18) mit stimulierter Emissionsdepletion, umfassend eine Mikroskopsteuerung (42), die ausgebildet ist, das Fluoreszenzmikroskop (10) in einem Bildgebungsprozess derart zu steuern, dass
ein Beleuchtungsfokus erzeugt wird, indem einer fokussierten Anregungslichtverteilung eine fokussierte Abregungslichtverteilung zur stimulierten Emissionsdepletion überlagert wird, wodurch die Probe (18) beim Beleuchten mit dem Beleuchtungsfokus nur innerhalb eines effektiven Anregungsfokus, dessen Ausdehnung gegenüber der Ausdehnung der Anregungslichtverteilung verringert ist, zur Emission von bildgebendem Fluoreszenzlicht angeregt wird, und
innerhalb eines Zielbereichs der Probe (18) eine Vielzahl von Probensegmenten sukzessive mittels des Beleuchtungsfokus mit einer ersten Ortsauflösung, die durch die verringerte Ausdehnung des effektiven Anregungsfokus definiert ist, abgerastert und in eine entsprechende Vielzahl von Bildsegmenten abgebildet werden, aus denen ein Rasterbild erzeugt wird,
wobei das Fluoreszenzmikroskop (10) mittels der Mikroskopsteuerung (42) ferner derart gesteuert wird, dass
vor dem Bildgebungsprozess ein Übersichtsbild (48) des Zielbereichs mit einer zweiten Ortsauflösung erzeugt wird, die geringer als die erste Ortsauflösung und höher als eine durch die Ausdehnung der Anregungslichtverteilung definierte dritte Ortsauflösung ist, und das Übersichtsbild (48) zur Identifizierung von Bildbereichen ohne relevante Bildinformation analysiert wird, und
während des Bildgebungsprozesses beim Abrastern derjenigen Probensegmente, die den in dem Übersichtsbild (48) identifizierten Bildbereichen ohne relevante Bildinformation zugeordnet sind, zumindest die Strahlungsleistung der Abregungslichtverteilung verringert wird,
**dadurch gekennzeichnet, dass** das Übersichtsbild (48) mit der zweiten Ortsauflösung erzeugt wird, indem zunächst ein Rohbild (44) mit einer Ortsauflösung aufgenommen wird, die geringer als die zweite Ortsauflösung ist, und dann an dem Rohbild (44) eine die Ortsauflösung steigernde Bildverarbeitung durchgeführt wird,
wobei die zweite Ortsauflösung gegenüber der dritten Ortsauflösung um einen Faktor zwischen 1,5 und 2 erhöht ist.

## Claims

1. A method of imaging a sample (18) using a stimulated emission depletion fluorescence microscope (10), comprising an imaging process in which the fluorescence microscope (10) is controlled by means of a microscope controller (42) such that
an illumination focus is generated by superimposing a focused de-excitation light distribution on a focused excitation light distribution for stimulated emission depletion, whereby the sample (18), when illuminated with the illumination focus, is excited to emit imaging fluorescent light only within an effective excitation focus, the extent of which is reduced relative to the extent of the excitation light distribution, and
within a target area of the sample (18), a plurality of sample segments are successively scanned by means of the illumination focus with a first spatial resolution defined by the reduced extent of the effective excitation focus and imaged into a corresponding plurality of image segments from which a raster image (58) is generated,
wherein the fluorescence microscope (10) is further controlled by means of the microscope controller (42) such that
before the imaging process, an overview image (48) of the target area is generated with a second spatial resolution which is lower than the first spatial resolution and higher than a third spatial resolution defined by the extent of the excitation light distribution, and the overview image (48) is analyzed to identify image areas without relevant image information, and
during the imaging process when scanning those sample segments which are assigned to the image areas without relevant image information identified in the overview image (48), at least the radiant power of the de-excitation light distribution is reduced,
**characterized in that** the overview image (48) is generated with the second spatial resolution by first capturing a raw image (44) with a spatial resolution which is lower than the second spatial resolution and then performing image processing on the raw image (44) to increase the spatial resolution,
the second spatial resolution being increased by a factor of between 1.5 and 2 compared to the third spatial resolution.

2. The method according to claim 1, **characterized in that** during the scanning of those sample segments which are assigned to the image areas without relevant image information identified in the overview image (48), the radiation power of the excitation light distribution is additionally reduced.

3. The method according to claim 1 or 2, **characterized in that** said radiant power is reduced to zero.

4. The method according to claim 3, **characterized in that** the raw image (44) is generated by scanning the target area by means of the excitation light distribution with the third spatial resolution.

5. The method according to claim 4, **characterized in that** the raw image (44) is produced by a confocal raster imaging.

6. The method according to one of the preceding claims, **characterized in that** the raw image (44) is generated using wide-field illumination.

7. The method according to one of the preceding claims, **characterized in that** the image processing provides for a deconvolution of the raw image (44).

8. The method according to one of the preceding claims, **characterized in that** a radiant power table is created and stored on the basis of the analysis of the overview image (48), which table assigns at least one value for the radiant power of the de-excitation light distribution to each sample segment to be imaged during the imaging process.

9. The method according to one of the preceding claims, **characterized in that** exclusion areas are determined among the image areas identified in the overview image (48) without relevant image information and those sample segments which are assigned to these exclusion areas are skipped when scanning the target area with the first spatial resolution.

10. A fluorescence microscope (10) for imaging a sample (18) with stimulated emission depletion, comprising a microscope controller (42) configured to control the fluorescence microscope (10) in an imaging process such that
an illumination focus is generated by superimposing a focused de-excitation light distribution on a focused excitation light distribution for stimulated emission depletion, whereby the sample (18), when illuminated with the illumination focus, is excited to emit imaging fluorescent light only within an effective excitation focus, the extent of which is reduced relative to the extent of the excitation light distribution, and
within a target area of the sample (18), a plurality of sample segments are successively scanned by means of the illumination focus with a first spatial resolution defined by the reduced extent of the effective excitation focus and imaged into a corresponding plurality of image segments from which a raster image is generated,
wherein the fluorescence microscope (10) is further controlled by means of the microscope controller (42) such that
before the imaging process, an overview image (48) of the target area is generated with a second spatial resolution which is lower than the first spatial resolution and higher than a third spatial resolution defined by the extent of the excitation light distribution, and the overview image (48) is analyzed to identify image areas without relevant image information, and
during the imaging process when scanning those sample segments which are assigned to the image areas without relevant image information identified in the overview image (48), at least the radiant power of the de-excitation light distribution is reduced,
**characterized in that** the overview image (48) is generated with the second spatial resolution by first capturing a raw image (44) with a spatial resolution which is lower than the second spatial resolution and then performing image processing on the raw image (44) to increase the spatial resolution,
the second spatial resolution being increased by a factor of between 1.5 and 2 compared to the third spatial resolution.

## Revendications

1. Procédé permettant de représenter un échantillon (18) en utilisant un microscope à fluorescence (10) à déplétion par émission stimulée, comprenant un processus d'imagerie dans lequel le microscope à fluorescence (10) est commandé au moyen d'une commande de microscope (42) de telle sorte
qu'un foyer d'éclairage est généré en superposant à une distribution de lumière d'excitation focalisée une distribution de lumière de désexcitation focalisée pour la déplétion par émission stimulée, de sorte que lors de l'éclairage avec le foyer d'éclairage, l'échantillon (18) n'est excité qu'à l'intérieur d'un foyer d'excitation effectif dont l'étendue est réduite par rapport à l'étendue de la distribution de lumière d'excitation pour l'émission de lumière fluorescente d'imagerie, et
qu'à l'intérieur d'une zone cible de l'échantillon (18), une pluralité de segments d'échantillon est balayée successivement au moyen du foyer d'éclairage avec une première résolution spatiale qui est définie par l'étendue réduite du foyer d'excitation effectif, et est représentée en une pluralité correspondante de segments d'image à partir desquels une image tramée (58) est générée,
dans lequel le microscope à fluorescence (10) est en outre commandé au moyen de la commande de microscope (42) de telle sorte
qu'avant le processus d'imagerie, une image d'ensemble (48) de la zone cible est générée avec une deuxième résolution spatiale qui est inférieure à la première résolution spatiale et supérieure à une troisième résolution spatiale définie par l'étendue de la distribution de lumière d'excitation, et l'image d'ensemble (48) est analysée pour identifier des zones d'image sans informations d'image pertinentes, et
que pendant le processus d'imagerie, lors du balayage de ceux des segments d'échantillon qui sont associés aux zones d'image sans informations d'image pertinentes, identifiées sur l'image d'ensemble (48), au moins la puissance de rayonnement de la distribution de lumière de désexcitation est réduite,
**caractérisé en ce que** l'image d'ensemble (48) est générée avec la deuxième résolution spatiale **en ce que** d'abord une image brute (44) avec une résolution spatiale qui est inférieure à la deuxième résolution spatiale est enregistrée, et ensuite un traitement d'image augmentant la résolution spatiale est effectué sur l'image brute (44),
dans lequel la deuxième résolution spatiale est augmentée d'un facteur entre 1,5 et 2 par rapport à la troisième résolution spatiale.

2. Procédé selon la revendication 1, **caractérisé en ce que** lors du balayage de ceux des segments d'échantillon qui sont associés aux zones d'image sans informations d'image pertinentes, identifiées sur l'image d'ensemble (48), en plus la puissance de rayonnement de la distribution de lumière d'excitation est réduite.

3. Procédé selon la revendication 1 ou 2, **caractérisé en ce que** ladite puissance de rayonnement est réduite à zéro.

4. Procédé selon la revendication 3, **caractérisé en ce que** l'image brute (44) est générée **en ce que** la zone cible est balayée au moyen de la distribution de lumière d'excitation avec la troisième résolution spatiale.

5. Procédé selon la revendication 4, **caractérisé en ce que** l'image brute (44) est générée par une représentation tramée confocale.

6. Procédé selon l'une quelconque des revendications précédentes, **caractérisé en ce que** l'image brute (44) est générée en utilisant un éclairage grand champ.

7. Procédé selon l'une quelconque des revendications précédentes, **caractérisé en ce que** le traitement d'image prévoit une déconvolution de l'image brute (44) .

8. Procédé selon l'une quelconque des revendications précédentes, **caractérisé en ce que** sur la base de l'analyse de l'image d'ensemble (48), une table de puissance de rayonnement est créée et stockée qui associe pendant le processus d'imagerie à chaque segment d'échantillon à représenter au moins une valeur pour la puissance de rayonnement de la distribution de lumière de désexcitation.

9. Procédé selon l'une quelconque des revendications précédentes, **caractérisé en ce que** parmi les zones d'image sans informations d'image pertinentes, identifiées sur l'image d'ensemble (48), des zones d'exclusion sont déterminées, et ceux des segments d'échantillon qui sont associés à ces zones d'exclusion sont ignorés lors du balayage de la zone cible avec la première résolution spatiale.

10. Microscope à fluorescence (10) permettant de représenter un échantillon (18) à déplétion par émission stimulée, comprenant une commande de microscope (42) qui est réalisée pour commander le microscope à fluorescence (10) dans un processus d'imagerie de telle sorte
qu'un foyer d'éclairage est généré en superposant à une distribution de lumière d'excitation focalisée une distribution de lumière de désexcitation focalisée pour la déplétion par émission stimulée, de sorte que lors de l'éclairage avec le foyer d'éclairage, l'échantillon (18) n'est excité qu'à l'intérieur d'un foyer d'excitation effectif dont l'étendue est réduite par rapport à l'étendue de la distribution de lumière d'excitation pour l'émission de lumière fluorescente d'imagerie, et
qu'à l'intérieur d'une zone cible de l'échantillon (18), une pluralité de segments d'échantillon est balayée successivement au moyen du foyer d'éclairage avec une première résolution spatiale qui est définie par l'étendue réduite du foyer d'excitation effectif, et est représentée en une pluralité correspondante de segments d'image à partir desquels une image tramée est générée,
dans lequel le microscope à fluorescence (10) est en outre commandé au moyen de la commande de microscope (42) de telle sorte
qu'avant le processus d'imagerie, une image d'ensemble (48) de la zone cible est générée avec une deuxième résolution spatiale qui est inférieure à la première résolution spatiale et supérieure à une troisième résolution spatiale définie par l'étendue de la distribution de lumière d'excitation, et l'image d'ensemble (48) est analysée pour identifier des zones d'image sans informations d'image pertinentes, et
que pendant le processus d'imagerie, lors du balayage de ceux des segments d'échantillon qui sont associés aux zones d'image sans informations d'image pertinentes, identifiées sur l'image d'ensemble (48), au moins la puissance de rayonnement de la distribution de lumière de désexcitation est réduite,
**caractérisé en ce que** l'image d'ensemble (48) est générée avec la deuxième résolution spatiale **en ce que** d'abord une image brute (44) avec une résolution spatiale qui est inférieure à la deuxième résolution spatiale est enregistrée, et ensuite un traitement d'image augmentant la résolution spatiale est effectué sur l'image brute (44),
dans lequel la deuxième résolution spatiale est augmentée d'un facteur entre 1,5 et 2 par rapport à la troisième résolution spatiale.
